# EUROPEAN PATENT APPLICATION

(11) **EP 1 911 795 A1**
(43) Date of publication of application: **16.04.2008**
(21) Application number: 06782267.6
(22) Date of filing: 03.08.2006
(51) Int. Cl.: C08J 9/00, C08J 9/26, H01M 2/16

(54) **POLYETHYLENE MICROPOROUS MEMBRANE, PROCESS FOR PRODUCTION THEREOF, AND BATTERY SEPARATOR**

(30) Priority: 04.08.2005 JP 2005227160; 02.08.2006 JP 2006211390
(71) Applicant: Tonen Chemical Corporation, Tokyo 108-8005 (JP)
(72) Inventor: TAKITA, Kotaro, Tochigi 3292735 (JP); KIKUCHI, Shintaro, Saitama 3370017 (JP); YAMADA, Kazuhiro, Tochigi 3292732 (JP); NAKAMURA, Teiji, Tokyo 1670031 (JP); KONO, Koichi, Saitama 3510025 (JP)
(74) Representative: Strehl Schübel-Hopf & Partner
(86) International application number: PCT/JP2006/315407
(87) International publication number: WO 2007/015547

(57) **Abstract**

A microporous polyethylene membrane made of a polyethylene resin comprising 15% or less by mass of ultra-high-molecular-weight polyethylene having a mass-average molecular weight of 1 x 10⁶ or more, which is constituted by a dense-structure layer having an average pore diameter of 0.01 to 0.05 µm, and a coarse-structure layer formed on at least one surface and having an average pore diameter 1.2-fold to 5.0-fold of that of the dense-structure layer, has a high electrolytic solution absorption speed with thickness and air permeability little changing when compressed. Such a microporous polyethylene membrane is produced by extruding a melt blend of the above polyethylene resin and a membrane-forming solvent through a die, cooling the resultant extrudate with a temperature distribution in a thickness direction to provide a gel-like sheet, stretching the gel-like sheet at a temperature from the crystal dispersion temperature of the polyethylene resin + 10°C to the crystal dispersion temperature + 30°C, removing the membrane-forming solvent, and stretching the membrane again to 1.05-fold to 1.45-fold.

## Description

### FIELD OF THE INVENTION

This invention relates to a microporous polyethylene membrane having a high electrolytic solution absorption speed with thickness and air permeability little changing when compressed, its production method, and a battery separator.

### BACKGROUND OF THE INVENTION

Microporous polyolefin membranes are widely used in separators for lithium batteries, etc., electrolytic capacitor separators, steam-permeable, waterproof clothing, various filters, etc. When the microporous polyolefin membranes are used as battery separators, their performance largely affects the performance, productivity and safety of batteries. Accordingly, they are required to have excellent permeability, mechanical properties, heat shrinkage resistance, shutdown properties, meltdown properties, etc. For instance, when microporous polyolefin membranes having low mechanical strength are used as battery separators, batteries generate low voltage.

To provide microporous polyolefin membranes with improved properties, proposals have been made to optimize starting material compositions, stretching conditions, heat treatment conditions, etc. JP 2-94356 A, for instance, proposes a microporous polyethylene membrane for a lithium battery separator having good assemblability and low electric resistance, wherein the microporous polyethylene membrane is produced by melt-blending a high-density polyethylene resin having a mass-average molecular weight (Mw) of 400,000 to 2,000,000 and a molecular weight distribution [mass-average molecular weight / number-average molecular weight (Mw/Mn)] of 25 or less with fine inorganic powder and an organic liquid, extruding the resultant melt blend through a die, and cooling the resultant extrudate to provide a gel-like sheet, removing the fine inorganic powder and the organic liquid, and stretching the resultant membrane to 1.5-fold or more. However, this microporous polyethylene membrane has insufficient strength because of too large surface pore size.

JP 5-9332 A proposes a microporous membrane having high strength, wherein the microporous polyethylene membrane is produced by melt-blending ultra-high-molecular-weight polyethylene having a viscosity-average molecular weight of 2,000,000 or more with fine inorganic powder and a plasticizer [mixture of a plasticizer having a solubility parameter (SP) of 7.5 to 8.4 and a plasticizer having SP of 8.5 to 9.5, the amount of the plasticizer having SP of 7.5 to 8.4 being 10 to 150% by mass of the polyethylene mass], extruding the resultant melt blend through a die, cooling the resultant extrudate to provide a gel-like sheet, removing the fine inorganic powder and the plasticizer, drying the resultant membrane, and stretching the membrane only in one direction. However, this microporous membrane also has insufficient strength because of too large surface pore size.

In such circumstances, the applicant proposed a microporous polyolefin membrane made of a polyolefin composition having Mw/Mn of 10 to 300 and comprising 1% or more by mass of a component having Mw of 7 x 10⁵ or more, whose degree of orientation changes in a thickness direction (Japanese Patent 3347854). This microporous polyolefin membrane having excellent mechanical strength is produced by melt-blending the above polyolefin composition and a membrane-forming solvent, extruding the resultant melt blend through a die, cooling the resultant extrudate to provide a gel-like sheet, stretching the gel-like sheet while heating to provide a temperature distribution in a thickness direction, and removing the membrane-forming solvent.

The applicant also proposed a microporous polyolefin membrane constituted by fine fibrils made of a polyolefin having Mw of 5 x 10⁵ or more or a polyolefin composition containing such polyolefin, which has an average pore size of 0.05 to 5 µm, the percentage of crystal lamellas having angles θ of 80 to 100° relative to a membrane surface being 40% or more in each longitudinal or transverse cross section (WO 2000/20492). This microporous membrane having excellent permeability is produced by extruding a solution comprising 10 to 50% by mass of the above polyolefin or polyolefin composition and 50 to 90% by mass of a membrane-forming solvent through a die, cooling the resultant extrudate to provide a gel-like sheet, stretching the gel-like molding if necessary, heat-setting the resultant membrane at a temperature from the crystal dispersion temperature of the polyolefin or polyolefin composition to its melting point + 30 °C, and removing the membrane-forming solvent.

The applicant also proposed a microporous polyolefin membrane made of a polyolefin having Mw of 5 x 10⁵ or more or a polyolefin composition containing such polyolefin, in which an average pore size gradually decreases from at least one surface to a center in a thickness direction (WO 2000/20493). This microporous membrane having excellent permeability is produced by extruding a solution comprising 10 to 50% by mass of the above polyolefin or polyolefin composition and 50 to 90% by mass of a membrane-forming solvent through a die, cooling the resultant extrudate to provide a gel-like sheet, and bringing the gel-like sheet into contact with a hot solvent and then removing the membrane-forming solvent, or removing the membrane-forming solvent from the gel-like sheet and then bringing the resultant membrane into contact with a hot solvent.

However, recently gaining importance as separator characteristics are not only permeability and mechanical strength, but also battery life characteristics such as cycle characteristics and battery productivity such as electrolytic solution absorbability. Particularly a lithium ion battery electrode expands by the intrusion of lithium when charged, and shrinks by the departure of lithium when discharged, an expansion ratio when charged tending to become larger as recent increase in the capacity of batteries. Because a separator is compressed when the electrode expands, the separator is required to suffer only small variation of permeability and thickness by compression. However, any microporous membrane described in the above references does not have sufficient compression resistance. A microporous membrane with poor compression resistance is highly likely to provide batteries with insufficient capacity (poor cycle characteristics) when used as a separator.

### OBJECT OF THE INVENTION

Accordingly, an object of this invention is to provide a microporous polyethylene membrane having a high electrolytic solution absorption speed with thickness and air permeability little changing when compressed, its production method, and a battery separator formed by such microporous polyethylene membrane.

### DISCLOSURE OF THE INVENTION

As a result of intense research in view of the above object, the inventors have found that a microporous polyethylene membrane comprising a dense-structure layer with an average pore diameter of 0.01 to 0.05 µm and a coarse-structure layer having an average pore diameter 1.2-fold to 5.0-fold of that of the dense-structure layer, which has a high electrolytic solution absorption speed with thickness and air permeability little changing when compressed, can be obtained by extruding a melt blend of a polyethylene resin comprising 15% or less by mass of ultra-high-molecular-weight polyethylene and a membrane-forming solvent through a die, cooling the resultant extrudate with a temperature distribution in a thickness direction to provide a gel-like sheet, stretching it at a temperature from the crystal dispersion temperature of the polyethylene resin + 10°C to the crystal dispersion temperature + 30°C, removing the membrane-forming solvent, and stretching the resultant membrane again to 1.05-fold to 1.45-fold. Based on such findings, this invention has been accomplished.

Thus, the microporous polyethylene membrane of this invention is made of a polyethylene resin comprising 15% or less by mass of ultra-high-molecular-weight polyethylene having a mass-average molecular weight of 1 x 10⁶ or more, the microporous polyethylene membrane comprising a dense-structure layer having an average pore diameter of 0.01 to 0.05 µm, and a coarse-structure layer formed on at least one surface, the average pore diameter of the coarse-structure layer being as large as 1.2-fold to 5.0-fold of that of the dense-structure layer.

The polyethylene resin is preferably composed of the ultra-high-molecular-weight polyethylene and high-density polyethylene. A thickness ratio of the coarse-structure layer to the dense-structure layer is preferably 5/1 to 1/10.

The method of this invention for producing a microporous polyethylene membrane comprising the steps of extruding a melt blend of a polyethylene resin comprising 15% or less by mass of ultra-high-molecular-weight polyethylene having a mass-average molecular weight of 1 x 10⁶ or more and a membrane-forming solvent through a die, cooling the resultant extrudate with a temperature distribution in a thickness direction to provide a gel-like sheet, stretching the gel-like sheet at a temperature from the crystal dispersion temperature of the polyethylene resin + 10°C to the crystal dispersion temperature +30°C in at least one direction, removing the membrane-forming solvent, and stretching the resultant membrane again to 1.05-fold to 1.45-fold in at least one direction.

In a preferred example of such production method, one surface of the extrudate is rapidly cooled, while another surface of the extrudate is slowly cooled, thereby forming the above coarse-structure layer on one surface of the microporous membrane. To cool one surface of the extrudate rapidly, the extrudate is preferably brought into contact with a cooling roll controlled at a temperature from the crystallization temperature of the polyethylene resin - 115°C to the crystallization temperature - 25°C for 1 to 30 seconds. Another surface of the extrudate is preferably slowly cooled by exposure to the air at room temperature.

In another preferred example of the production method of this invention, after the gel-like sheet is heat-set, the membrane-forming solvent is removed. The heat-setting treatment of the stretched gel-like sheet containing the membrane-forming solvent provides both surfaces of the microporous membrane with coarse-structure layers.

In a further preferred example of the production method of this invention, the stretched gel-like sheet, and/or a microporous membrane from which the membrane-forming solvent is removed are brought into contact with a heated solvent, thereby forming coarse-structure layers on both surfaces of the microporous membrane.

The battery separator of this invention is formed by the above microporous polyethylene membrane.

### DESCRIPTION OF THE PREFERRED EMBODIMENTS

[1] Polyethylene resin

The microporous polyethylene membrane of this invention, which can be called simply as "microporous membrane" hereinafter, is made of a polyethylene resin comprising 15% or less by mass of ultra-high-molecular-weight polyethylene having a mass-average molecular weight (Mw) of 1 x 10⁶ or more. The polyethylene resin is preferably (a) a polyethylene composition comprising ultra-high-molecular-weight polyethylene having Mw of 1 x 10⁶ or more and polyethylene other than the ultra-high-molecular-weight polyethylene, (b) polyethylene other than the ultra-high-molecular-weight polyethylene, or (c) a mixture of the polyethylene composition or the polyethylene other than the ultra-high-molecular-weight polyethylene with a polyolefin other than polyethylene (polyolefin composition).

(a) Polyethylene composition

The ultra-high-molecular-weight polyethylene can be not only an ethylene homopolymer, but also a copolymer containing a small amount of other α-olefin(s). The other α-olefins than ethylene include propylene, butene-1, pentene-1, hexene-1, 4-methylpentene-1, octene-1, vinyl acetate, methyl methacrylate, styrene, etc. The ultra-high-molecular-weight polyethylene preferably has Mw in a range from 1 x 10⁶ to 3 x 10⁶. The ultra-high-molecular-weight polyethylene having Mw of 3 x 10⁶ or less secures easy melt extrusion.

The polyethylene other than the ultra-high-molecular-weight polyethylene has Mw less than 1 x 10⁶, preferably being at least one selected from the group consisting of high-density polyethylene, intermediate-density polyethylene, branched low-density polyethylene and linear low-density polyethylene, more preferably high-density polyethylene. The polyethylene other than the ultra-high-molecular-weight polyethylene can not only be an ethylene homopolymer, but also a copolymer containing a small amount of other α-olefin(s). The other α-olefins than ethylene can be the same as described above. Such copolymers are preferably produced using single-site catalysts. The polyethylene other than the ultra-high-molecular-weight polyethylene preferably has Mw in a range of 1 x 10⁴ or more and less than 5 x 10⁵. Among them, the Mw of the high-density polyethylene is more preferably in a range of 7 x 10⁴ or more and less than 5 x 10⁵, particularly in a range of 2 x 10⁵ or more and less than 5 x 10⁵. Two or more types of polyethylene other than the ultra-high-molecular-weight polyethylene with different Mw or densities can be used.

The Mw of the polyethylene composition is preferably in a range of 1 x 10⁶ or less, more preferably in a range from 1 x 10⁵ to 1 x 10⁶, particularly in a range from 2 x 10⁵ to 1 x 10⁶. The polyethylene composition having Mw more than 1 x 10⁶ fails to form a coarse-structure layer having an average pore diameter 1.2-fold to 5.0-fold that of the dense-structure layer. When the Mw of the polyethylene composition is less than 1 x 10⁵, the membrane is likely broken when stretched, resulting in difficulty in obtaining a suitable microporous polyethylene membrane.

The ultra-high-molecular-weight polyethylene content in the polyethylene composition is 15% or less by mass, based on the total amount (100% by mass) of the ultra-high-molecular-weight polyethylene and the other polyethylene. When this percentage is more than 15% by mass, a coarse-structure layer is not formed. This percentage is preferably 12% or less by mass, particularly 10% or less by mass. Though not critical, the lower limit of this percentage is preferably 1% by mass to obtain excellent mechanical strength.

(b) Polyethylene other than ultra-high-molecular-weight polyethylene

The polyethylene resin can be composed only of the other polyethylene than the ultra-high-molecular-weight polyethylene, which can be the same as described above.

(c) Polyolefin composition

The polyolefin composition is a mixture of the polyethylene composition or polyethylene other than the ultra-high-molecular-weight polyethylene with a polyolefin other than polyethylene. The polyethylene composition and polyethylene other than the ultra-high-molecular-weight polyethylene can be the same as described above.

The polyolefin other than polyethylene is at least one selected from the group consisting of polypropylene, polybutene-1, polypentene-1, polyhexene-1, poly4-methylpentene-1, polyoctene-1, polyvinyl acetate, polymethyl methacrylate, polystyrene and ethylene-α-olefin copolymers each having Mw of 1 x 10⁴ to 4 x 10⁶, and a polyethylene wax having Mw of 1 x 10³ to 1 x 10⁴. Polypropylene, polybutene-1, polypentene-1, polyhexene-1, poly4-methylpentene-1, polyoctene-1, polyvinyl acetate, polymethyl methacrylate and polystyrene can be not only homopolymers, but also copolymers containing other α-olefin(s). The percentage of the polyolefin other than polyethylene is preferably 20% or less by mass, more preferably 10% or less by mass, based on 100% by mass of the entire polyolefin composition.

When the microporous polyethylene membrane containing polypropylene is used as a separator, the meltdown properties and high-temperature-storing properties of a battery are improved. Polypropylene is preferably a homopolymer. When a copolymer of propylene and other α-olefin(s), or a mixture of the homopolymer and the copolymer is used, the copolymer can be a random or block copolymer. The other α-olefin is preferably ethylene.

When the polyolefin composition is a mixture of the polyethylene composition and the polyolefin other than polyethylene, the ultra-high-molecular-weight polyethylene content is 15% or less by mass, based on the total amount (100% by mass) of the polyethylene composition and the polyolefin other than polyethylene. This percentage is preferably 12% or less by mass, particularly 10% or less by mass. The lower limit of this percentage is preferably 1% by mass.

(D) Molecular weight distribution Mw/Mn

Mw/Mn is a measure of a molecular weight distribution, the larger this value, the wider the molecular weight distribution. Though not critical, the Mw/Mn of the polyethylene composition and the polyethylene other than the ultra-high-molecular-weight polyethylene is preferably 5 to 30, more preferably 10 to 25. When the Mw/Mn is less than 5, there are excessive high-molecular weight components, resulting in difficulty in melt extrusion. When the Mw/Mn is more than 30, there are excessive low-molecular weight components, resulting in a microporous membrane with decreased strength. The Mw/Mn of the polyethylene (homopolymer or ethylene-α-olefin copolymer) can be properly controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn, the larger difference in a mass-average molecular weight between the ultra-high-molecular-weight polyethylene and the other polyethylene, and vice versa. The Mw/Mn of the polyethylene composition can be properly controlled by the molecular weight and percentage of each component.

[2] Production method of microporous polyethylene membrane

(a) First production method

The first method of this invention for producing a microporous polyethylene membrane comprises a step (1) of melt-blending a polyethylene resin and a membrane-forming solvent to prepare a polyethylene solution, a step (2) of extruding the polyethylene solution through a die, a step (3) of cooling the resultant extrudate to form a gel-like sheet such that there is a temperature distribution thickness direction, a first stretching step (4), a step (5) of removing the membrane-forming solvent, a drying step (6), and a second stretching step (7). After the step (7), if necessary, a heat-treating step (8), a cross-linking step (9) with ionizing radiations, a hydrophilizing step (10), a surface-coating step (11), etc. can be conducted.

(1) Preparation of polyethylene solution

The polyethylene resin and a membrane-forming solvent are melt-blended to prepare a polyethylene solution. The polyethylene solution can contain various additives such as antioxidants, ultraviolet absorbents, antiblocking agents, pigments, dyes, inorganic fillers, etc., if necessary, in ranges not deteriorating the effects of this invention. Fine silicate powder, for instance, can be added as a pore-forming agent.

The membrane-forming solvent can be liquid or solid. The liquid solvents can be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel-like sheet having a stable solvent content, non-volatile liquid solvents such as liquid paraffin are preferable. The solid solvent preferably has melting point of 80°C or lower. Such solid solvents are paraffin wax, ceryl alcohol, stearyl alcohol, dicyclohexyl phthalate, etc. The liquid solvent and the solid solvent can be used in combination.

The viscosity of the liquid solvent is preferably 30 to 500 cSt, more preferably 50 to 200 cSt, at a temperature of 25°C. When this viscosity is less than 30 cSt, the polyethylene solution is unevenly extruded through a die lip, resulting in difficulty in blending. The viscosity of more than 500 cSt makes the removal of the liquid solvent difficult.

Though not particularly critical, the uniform melt-blending of the polyethylene solution is preferably conducted in a double-screw extruder. Melt-blending in a double-screw extruder is suitable for preparing a high-concentration polyethylene solution. In a case where the polyethylene resin is as described in [1] (a) to (c) above, the melt-blending temperature is preferably the melting point of (a) the polyethylene composition or (b) the polyethylene other than the ultra-high-molecular-weight polyethylene in the polyethylene resin + 10°C to the melting point + 100°C. Accordingly, when the polyethylene resin is one described in (a) or (b) above, the melt-blending temperature is preferably the melting point of the polyethylene resin + 10°C to the melting point + 100°C. Specifically, the melt-blending temperature is preferably 140°C to 250°C, more preferably 170°C to 240°C. The melting point is measured by differential scanning calorimetry (DSC) according to JIS K7121.

When the polyethylene resin is (c) a polyolefin composition, and when the melting point of the other polyolefin is higher than that of the polyethylene composition or the other polyethylene than the ultra-high-molecular-weight polyethylene, the lower limit of the melt-blending temperature is more preferably the melting point of the other polyolefin. For instance, when the other polyolefin is polypropylene, the melt-blending temperature is preferably the melting point of polypropylene to the melting point of the polyethylene composition or the other polyethylene than the ultra-high-molecular-weight polyethylene + 100°C.

The membrane-forming solvent can be added before blending, or charged into the double-screw extruder at an intermediate position during blending, though the latter is preferable. In the melt-blending, an antioxidant is preferably added to prevent the oxidization of the polyethylene resin.

The content of the polyethylene resin in the polyethylene solution is preferably 15 to 50% by mass, more preferably 20 to 45% by mass, particularly 25 to 40% by mass, based on 100% by mass of the total of the polyethylene resin and the membrane-forming solvent. Less than 15% by mass of the polyethylene resin content results in low productivity, and causes large swelling and neck-in at the die exit in the extrusion of the polyethylene solution, resulting in decrease in the formability and self-supportability of the gel-like molding. More than 50% by mass of the polyethylene resin content deteriorates the formability of the gel-like molding.

(2) Extrusion

The melt-blended polyethylene solution is extruded through the die of the extruder directly or through a die of another extruder, or once cooled to pellets and extruded through a die of an extruder again. A rectangular sheet-forming die lip is usually used, but a double-cylindrical die lip, an inflation die lip, etc. are also usable. The sheet-forming die lip usually has a die lip gap in a range of 0.1 to 5 mm, and heated at 140 to 250°C during extrusion. The extrusion speed of the heated solution is preferably in a range of 0.2 to 15 m/minute.

(3) Formation of gel-like sheet

An extrudate from the die lip is cooled with a temperature distribution in a thickness direction to provide a gel-like sheet. The method of cooling the extrudate with a temperature distribution in a thickness direction is preferably a method of rapidly cooling one surface of the extrudate while slowly cooling another surface of the extrudate.

The method of rapidly cooling one surface of the extrudate can be a method of bring the extrudate into contact with a cooling roll, a method of bring the extrudate into contact with a cooling medium such as a cooling air, a cooling water, etc., preferably a cooling-roll method. In any case where the polyethylene resin is as described in any one of [1] (a) to (c) above, the cooling roll temperature is preferably in a range from the crystallization temperature of (a) the polyethylene composition or (b) the polyethylene other than the ultra-high-molecular-weight polyethylene contained in the polyethylene resin - 115°C to the crystallization temperature - 25°C. Accordingly, when the polyethylene resin is as described in (a) or (b) above, the cooling roll temperature is preferably in a range from the crystallization temperature of the polyethylene resin - 115°C to the crystallization temperature - 25°C. When the cooling roll temperature is lower than the crystallization temperature - 115°C, the entire extrudate is rapidly cooled, making it unlikely to generate a temperature distribution in a thickness direction. On the other hand, when the cooling roll temperature is higher than the crystallization temperature - 25°C, sufficiently rapid cooling cannot be achieved. The cooling roll temperature is more preferably in a range from the crystallization temperature - 115°C to the crystallization temperature - 55°C, particularly in a range from the crystallization temperature - 105°C to the crystallization temperature - 80°C. The "crystallization temperature" is measured according to JIS K7121.

The crystallization temperature of (a) the polyethylene composition and (b) the polyethylene other than the ultra-high-molecular-weight polyethylene is generally 102 to 108°C. Accordingly, the cooling roll temperature is preferably in a range from -10°C to + 80°C, more preferably in a range from -10°C to 50°C, particularly in a range from 0°C to 25°C. The contact time of the extrudate with a cooling roll is preferably 1 to 30 seconds, more preferably 2 to 15 seconds. When this contact time is shorter than 1 second, a temperature distribution is not easily generated in a thickness direction. On the other hand, when the contact time is more than 30 seconds, the entire extrudate is so rapidly cooled that the temperature distribution in a thickness direction disappears.

The conveying speed of the extrudate by a cooling roll is preferably 0.5 to 20 m/minute, more preferably 1 to 10 m/minute, though it can be on such a level that neck-in does not occur in the extrudate. The diameter of the cooling roll is preferably 10 to 150 cm, more preferably 15 to 100 cm. When this diameter is less than 10 cm, there is too short contact time of the extrudate with the roll, failing to achieve sufficiently rapid cooling. On the other hand, when the diameter is more than 150 cm, too large facility is needed. One cooling roll is usually used, but pluralities of cooling rolls can be used if necessary, as long as the contact time of the extrudate with the cooling rolls is within the above range.

It is preferable to slowly cool another surface of the extrudate by exposure to the air at room temperature. The room temperature can be a temperature between 10°C and 40°C, though not critical. An air-blowing method using an air-cooling means can be used for slow cooling. The air-cooling means can be a blower, a nozzle, etc. An air flow temperature in the air-cooling means is not particularly limited as long as it is in a range of achieving slow cooling, but is, for instance, 10 to 100°C, preferably 15 to 80°C.

The above cooling of the extrudate is conducted to at least a gelation temperature or lower. Specifically, the cooling is conducted to preferably 35 to 50°C, more preferably 25°C or lower.

Because the content of the ultra-high-molecular-weight polyethylene in the polyethylene resin is 15% or less by mass in this invention, a gel-like sheet obtained by rapidly cooling one surface of the extrudate while slowly cooling another surface of the extrudate as described above is provided with a rapidly cooled layer and a slowly cooled layer having different crystal structure densities. Specifically, the gel-like sheet has a rapidly cooled layer constituted by a crystal layer having a dense high-order structure (three-dimensional network structure layer of a polyethylene resin having large numbers of connections and a high network density), and a slowly cooled layer constituted by a crystal layer having a coarse high-order structure (three-dimensional network structure layer of a polyethylene resin having small numbers of connections and a low network density). Each of the rapidly cooled layer and the slowly cooled layer has a gel structure in which a polyethylene resin phase is micro-separated from a membrane-forming solvent phase.

The gel-like sheet thus formed is subjected to a first stretching step, a membrane-forming-solvent-removing step and a second stretching step described below, to produce a microporous membrane having a dense-structure layer and a coarse-structure layer.

(4) First stretching

The resultant gel-like sheet is stretched in at least one direction.
The stretching causes cleavage between polyethylene crystal lamellas, resulting in fine polyethylene phase with large numbers of fibrils. Because the gel-like sheet contains a membrane-forming solvent, it can be uniformly stretched.
After heating, the gel-like sheet is stretched to a predetermined magnification by a tenter method, a roll method, an inflation method, a rolling method, or their combination. Although the first stretching can be monoaxial or biaxial, biaxial stretching is preferable. The biaxial stretching can be simultaneous biaxial stretching, sequential stretching, or multi-stage stretching (for instance, a combination of simultaneous biaxial stretching and sequential stretching), though the simultaneous biaxial stretching is particularly preferable.

The stretching magnification is preferably 2-fold or more, more preferably 3-fold to 30-fold in the case of monoaxial stretching. In the case of biaxial stretching, it is at least 3-fold in both directions, with an area magnification of preferably 9-fold or more, more preferably 25-fold or more. The area magnification of less than 9-fold results in insufficient stretching, failing to providing a high-modulus, high-strength microporous membrane. When the area magnification is more than 400-fold, there are restrictions in stretching apparatuses, stretching operations, etc.

When the polyethylene resin is any one described in [1] (a) to (c) above, the first stretching temperature is in a range from the crystal dispersion temperature of (a) the polyethylene composition or (b) the polyethylene other than the ultra-high-molecular-weight polyethylene contained in the polyethylene resin + 10°C to the crystal dispersion temperature + 30°C. Thus, when the polyethylene resin is (a) or (b) above, the first stretching temperature is in a range from the crystal dispersion temperature of the polyethylene resin + 10°C to the crystal dispersion temperature + 30°C. When this stretching temperature is higher than the crystal dispersion temperature + 30°C, the stretched molecular chains have poor orientation. When the stretching temperature is lower than the crystal dispersion temperature + 10°C, leaf-vein-like fibrils are not formed in the slowly-cooled layer, resulting in small pore size and low compression resistance. The stretching temperature is preferably in a range from the crystal dispersion temperature + 15°C to the crystal dispersion temperature + 25°C.
The crystal dispersion temperature is determined by measuring the temperature characteristics of dynamic viscoelasticity according to ASTM D 4065. The crystal dispersion temperatures of (a) the polyethylene composition and (b) the polyethylene other than the ultra-high-molecular-weight polyethylene are in a range of 90 to 100°C. Accordingly, the stretching temperature is preferably in a range of 105 to 130°C, more preferably in a range of 110 to 125°C, particularly in a range of 115 to 125°C.

The first stretching can be conducted by two stages or more at different temperatures. In this case, two-stage stretching in which the temperature is higher in the second stage than in the first stage is preferable, to provide a uniform lamella layer. As a result, a high-permeability microporous membrane can be obtained without suffering decrease in strength and properties in a transverse direction. The stretching temperature difference between the first and second stages is preferably 5°C or more. The temperature elevation of the gel-like sheet from the first stage to the second stage can be conducted (i) while continuing stretching, or (ii) with the stretching stopped until reaching a predetermined temperature, followed by the stretching in the second stage.
The former method (i) is preferable. In any case, rapid heating during the temperature elevation is preferable. Specifically, heating is conducted at a temperature-elevating speed of preferably 0.1°C/second or more, more preferably 1 to 5°C/second. Needless to say, the stretching temperature at the first and second stages and the total stretching magnification should be respectively within the above-described ranges.

The first stretching forms leaf-vein-like fibrils having relatively thick trunks in the slowly-cooled layer of the gel-like sheet. Thus, the subsequent removal of the membrane-forming solvent provides high-strength microporous membrane. The leaf-vein-like fibrils comprise thick trunk fibers and thin branch fibers entangled to form a complicated network. On the other hand, fibrils are formed in a uniform and dense structure in the rapidly cooled layer of the gel-like sheet.

Depending on the desired properties, stretching can be conducted with a temperature distribution in a thickness direction in a range not deteriorating the effects of this invention. This provides a microporous membrane with higher mechanical strength. This method is described specifically in Japanese Patent 3347854.

(5) Removal of membrane-forming solvent

The membrane-forming solvent is removed (washed away) using a washing solvent. Because the polyethylene resin phase is separated from the membrane-forming solvent phase, the removal of the membrane-forming solvent provides a microporous membrane composed of fibrils constituting a fine, three-dimensional network structure and having three-dimensionally and irregularly communicating pores (gaps). The washing solvents can be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉OC₂F₅, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a microporous membrane having high porosity and permeability.

The washing of the stretched gel-like sheet can be conducted by a washing-solvent-immersing method, a washing-solvent-showering method, or a combination thereof. The amount of the washing solvent used is preferably 300 to 30,000 parts by mass per 100 parts by mass of the stretched membrane. The washing temperature can usually be 15 to 30°C, and heat-washing can be conducted, if necessary. The heat-washing temperature is preferably 80°C or lower. Washing with the washing solvent is preferably conducted until the amount of the remaining membrane-forming solvent becomes less than 1% by mass of that added.

(6) Drying of membrane

The microporous polyethylene membrane obtained by stretching and the removal of the membrane-forming solvent is then dried by a heat-drying method or wind-drying method. The drying temperature is preferably equal to or lower than the crystal dispersion temperature of (a) the polyethylene composition or (b) the polyethylene other than the ultra-high-molecular-weight polyethylene contained in the polyethylene resin, particularly 5°C or more lower than the crystal dispersion temperature. Drying is conducted until the percentage of the remaining washing solvent becomes preferably 5% or less by mass, more preferably 3% or less by mass, based on 100% by mass of the microporous membrane (dry weight). Insufficient drying undesirably reduces the porosity of the microporous membrane in subsequent second stretching and heat treatment steps, thereby resulting in poor permeability.

(7) Second stretching

The dried membrane is stretched again in at least one direction.
The second stretching can be conducted while heating by a tenter method, etc. like the first stretching. The second stretching can be monoaxial or biaxial.

The second stretching magnification is 1.05-fold to 1.45-fold. In the case of monoaxial stretching, for instance, it is 1.05-fold to 1.45-fold in a longitudinal direction (MD) or in a transverse direction (TD). In the case of biaxial stretching, it is 1.05-fold to 1.45-fold in both MD and TD. In the biaxial stretching, the stretching magnification can be the same or different between MD and TD as long as it is 1.05-fold to 1.45-fold, though it is preferable the same between MD and TD. When this magnification is less than 1.05-fold, sufficient compression resistance cannot be obtained. When this magnification is more than 1.45-fold, the coarse-structure layer has a small average pore diameter and thin fibrils. The second stretching magnification is more preferably 1.1-fold to 1.4-fold.

When the polyethylene resin is any one described in [1] (a) to (c) above, the second stretching temperature is preferably in a range from the crystal dispersion temperature of (a) the polyethylene composition or (b) the polyethylene other than the ultra-high-molecular-weight polyethylene contained in the polyethylene resin to the crystal dispersion temperature + 40°C. Accordingly, when the polyethylene resin is one described in (a) or (b) above, the second stretching temperature is preferably in a range from the crystal dispersion temperature of the polyethylene resin to the crystal dispersion temperature + 40°C. When the second stretching temperature exceeds the crystal dispersion temperature + 40°C, the permeability and the compression resistance are deteriorated, and there is large unevenness in properties (particularly air permeability) in a width direction when stretched in TD.
When the second stretching temperature is lower than the crystal dispersion temperature, the polyethylene resin is insufficiently softened, thus making it likely that the membrane is broken by stretching, and failing to achieve uniform stretching. The second stretching temperature is more preferably in a range from the crystal dispersion temperature + 10°C to the crystal dispersion temperature + 40°C. Specifically, the second stretching temperature is preferably in a range of 90 to 140°C, more preferably in a range of 100 to 135°C.

The second stretching after the removal of the solvent provides excellent electrolytic solution absorbability. Though not critical, the first stretching, the removal of a membrane-forming solvent, the drying treatment and the second stretching are preferably carried out on a continuous line (inline method). If necessary, however, the dried membrane can be once wound and then unwound to conduct the second stretching (offline method).

(8) Heat treatment

The second stretched membrane is preferably heat-treated. The heat treatment stabilizes crystals and makes lamellas uniform. The heat treatment can be heat setting and/or annealing. Particularly heat-setting stabilizes crystals in the membrane, keeping a network structure constituted by fibrils made finer by the second stretching, thereby providing a microporous membrane with excellent electrolytic solution absorbability and strength. The heat-setting is conducted at a temperature equal to or lower than the melting point of (a) the polyethylene composition or (b) the polyethylene other than the ultra-high-molecular-weight polyethylene contained in the polyethylene resin + 30°C, preferably at a temperature from the crystal dispersion temperature to the melting point. Though not particularly critical, the heat-setting time is preferably 0.1 seconds to 100 hours. The heat-setting less than 0.1 seconds fails to stabilize crystals sufficiently, and the heat-setting more than 100 hours results in low productivity. The heat-setting treatment is conducted by a tenter method, a roll method or a rolling method.

The annealing can be conducted using a belt conveyer or an air-floating furnace in addition to the above method. The annealing is conducted at a temperature equal to or lower than the melting point of (a) the polyethylene composition or (b) the polyethylene other than the ultra-high-molecular-weight polyethylene contained in the polyethylene resin, preferably at a temperature from 60°C to the melting point -5°C. Shrinkage by the annealing is controlled such that the length of the second-stretched membrane in a second stretching direction remains preferably 91 % or more, more preferably 95% or more, of that before the second stretching. When this shrinkage is less than 91 % in a length retention ratio, the membrane after the second stretching has a poor balance of properties, particularly permeability, in a width direction. Such annealing provides a high-strength microporous membrane with good permeability. The heat-setting and the annealing can be combined.

(9) Cross-linking of membrane

The second-stretched microporous membrane can be cross-linked by ionizing radiation such as α-rays, β-rays, γ-rays, electron beams, etc. The electron beam irradiation is preferably conducted at 0.1 to 100 Mrad and accelerating voltage of 100 to 300 kV. The cross-linking treatment elevates the meltdown temperature of the microporous polyethylene membrane.

(10) Hydrophilizing

The second-stretched microporous membrane can be hydrophilized. The hydrophilizing treatment can be a monomer-grafting treatment, a surfactant treatment, a corona discharge treatment, etc. The monomer-grafting treatment is preferably conducted after cross-linking.

In case of the surfactant treatment, any of nonionic surfactants can be used, such as cationic surfactants, anionic surfactants and amphoteric surfactants, but the nonionic surfactants are preferable. The microporous membrane is dipped in a solution of the surfactant in water or a lower alcohol such as methanol, ethanol, isopropyl alcohol, etc., or coated with the solution by a doctor blade method.

(11) Surface-coating

The second-stretched microporous membrane can be coated with porous polypropylene; a porous fluororesin such as polyvinylidene fluoride, polytetrafluoroethylene, etc.; porous polyimide; porous polyphenylene sulfide; etc., to improve meltdown properties when used as a battery separator. Polypropylene for a coating layer preferably has Mw of 5,000 to 500,000 and solubility of 0.5 g or more in 100 g of toluene at a temperature of 25°C. This polypropylene more preferably has a racemic diad fraction of 0.12 to 0.88. In the racemic diad, two connected monomer units are in an enantiomer relation.

(b) Second production method

The second production method differs from the first production method, only in that the membrane-forming solvent is removed after the first-stretched gel-like sheet is heat-set. The stretched gel-like sheet is preferably heated from both sides or only on the side of the rapidly cooled layer. The heat-setting method can be the same as described above. The heat-setting of the stretched gel-like sheet containing a membrane-forming solvent makes pore diameters larger on both surfaces of the microporous membrane, particularly an average pore diameter on and near the rapidly cooled layer surface to 1.2-fold to 5.0-fold of that before the heat-setting treatment. As long as the heat-setting temperature and time are within the above ranges, the dense-structure layer does not disappear in the membrane. Accordingly, the heat-setting of the stretched gel-like sheet can form coarse-structure layers on both surfaces of the microporous membrane.

(c) Third production method

The third production method differs from the first production method, only in that the first-stretched gel-like sheet and/or the membrane-forming-solvent-removed microporous membrane are brought into contact with a hot solvent. Accordingly, only the hot solvent treatment step will be described below.

The hot solvent treatment is preferably conducted on the unwashed, stretched gel-like sheet. Solvents usable for the heat treatment are preferably the same as the above liquid membrane-forming solvents, more preferably liquid paraffin. The heat treatment solvents can be the same as or different from those used for producing the polyethylene solution.

The hot solvent treatment method is not particularly critical as long as the stretched gel-like sheet or microporous membrane comes into contact with a hot solvent. It includes, for instance, a method of directly contacting the stretched gel-like sheet or microporous membrane with a hot solvent (simply called "direct method" unless otherwise mentioned), a method of contacting the stretched gel-like sheet or microporous membrane with a cold solvent and then heating it (simply called, "indirect method" unless otherwise mentioned), etc. The direct method includes a method of immersing the stretched gel-like sheet or microporous membrane in a hot solvent, a method of spraying a hot solvent to the stretched gel-like sheet or microporous membrane, a method of coating the stretched gel-like sheet or microporous membrane with a hot solvent, etc., and the immersing method is preferable for uniform treatment. In the indirect method, the stretched gel-like sheet or microporous membrane is immersed in a cold solvent, sprayed with a cold solvent, or coated with a cold solvent, and then brought into contact with a heat roll, heated in an oven, or immersed in a hot solvent.

In any case where the polyethylene resin is as described in any one of [1] (a) to (c) above, the hot solvent temperature is preferably in a range from the crystal dispersion temperature of (a) the polyethylene composition or (b) the polyethylene other than the ultra-high-molecular-weight polyethylene contained in the polyethylene resin to the melting point + 10°C. Specifically, the hot solvent temperature is preferably 110 to 140°C, more preferably 115 to 135°C. The contact time is preferably 0.1 seconds to 10 minutes, more preferably 1 second to 1 minute. Such hot solvent treatment enlarges pore diameters on both surfaces of the microporous membrane, particularly an average pore diameter on or near the rapidly cooled layer surface to 1.2-fold to 5.0-fold of that before the treatment. As long as the hot solvent treatment temperature and time are within the above ranges, the dense-structure layer does not disappear in the membrane. Accordingly, the hot solvent treatment of the stretched gel-like sheet can form coarse-structure layers on both surfaces of the microporous membrane.

The hot solvent treatment further strengthens leaf-vein-like fibrils in the slowly cooled layer formed by the first stretching. Accordingly, the leaf-vein-like fibrils are not made finer by the second stretching, leaving an average pore diameter in the slowly cooled layer unchanged. When the hot solvent temperature is lower than the crystal dispersion temperature, or when the contact time is shorter than 0.1 seconds, the hot solvent treatment provides substantially no effects. On the other hand, when the hot solvent temperature is higher than the melting point + 10°C, or when the contact time is longer than 10 minutes, the microporous membrane undesirably suffers strength decrease or is broken.

After the hot solvent treatment, the stretched gel-like sheet and/or microporous membrane is washed to remove the remaining heat treatment solvent. Because the washing method per se can be the same as the above method of removing a membrane-forming solvent, its description will be omitted. Needless to say, when the hot solvent treatment is conducted on the unwashed, stretched gel-like sheet, the heat treatment solvent can be removed by the above method of removing a membrane-forming solvent.

The heat-setting treatment before washing is not critical in the second production method, but can be conducted in the third production method. Namely, the heat-setting treatment can be conducted on the gel-like sheet before and/or after the hot solvent treatment in the third production method.

[3] Structure and properties of microporous polyethylene membrane

The microporous polyethylene membrane of this invention comprises a dense-structure layer having an average pore diameter of 0.01 to 0.05 µm, and a coarse-structure layer formed on at least one surface and having an average pore diameter 1.2-fold to 5.0-fold of that of the dense-structure layer. The average pore diameter of the coarse-structure layer is preferably 1.5-fold to 3.0-fold of that of the dense-structure layer. The coarse-structure layer can be formed on only one surface or on both surfaces. The average pore diameter of the dense-structure layer and the coarse-structure layer is determined from a transmission electron photmicrograph (TEM photograph) of a cross section of the microporous membrane.

The shape of the penetrating pores is particularly not limited. Both dense-structure layer and coarse-structure layer usually have pores constituted by three-dimensionally and irregularly communicating gaps. The average pore diameters of the microporous membranes obtained by the second and third production methods are equal to or more than that of the membrane obtained by the first production method in both dense-structure layer and coarse-structure layer.

Because the microporous polyethylene membrane of this invention comprises a dense-structure layer and a coarse-structure layer, it has excellent compression resistance and electrolytic solution absorbability. Specifically, it has a high electrolytic solution absorption speed with thickness and air permeability little changing when compressed. Why the microporous polyethylene membrane of this invention suffers only small thickness variation when compressed appears to be due to the fact that fibrils in the dense-structure layer are constituted by relatively thick fibers, making the dense-structure layer strong and highly resistant to compression. The ratio of the coarse-structure layer to the dense-structure layer expressed by the formula: (thickness of coarse-structure layer) / (thickness of dense-structure layer) is preferably 5/1 to 1/10, more preferably 3/1 to 1/5. When this ratio is more than 5/1, the microporous polyethylene membrane suffers large thickness variation when compressed, and has low mechanical strength. On the other hand, when this ratio is less than 1/10, the microporous polyethylene membrane has low electrolytic solution absorbability. This ratio can be determined from a transmission electron photmicrograph (TEM photograph) of a cross section of the microporous membrane. This ratio can be controlled by adjusting, for instance, the cooling roll temperature, the contact time of the extrudate with a cooling roll.

The microporous polyethylene membrane according to a preferred embodiment of this invention has the following properties.

(a) Porosity of 25 to 80%.

With the porosity of less than 25%, the microporous polyethylene membrane does not have good air permeability. When the porosity exceeds 80%, the microporous membrane used as a battery separator does not have enough strength, resulting in a high likelihood of short-circuiting between electrodes.

(b) Air permeability of 20 to 400 seconds/100 cm³ (converted to the value at 20-µm thickness)

When the air permeability is in a range from 20 to 400 seconds/100 cm³, batteries having separators formed by the microporous polyethylene membrane have large capacity and good cycle characteristics. When the air permeability is less than 20 seconds/100 cm³, shutdown does not fully occur when the temperature is elevated in the batteries.

(c) Pin puncture strength of 3,000 mN/20 µm or more

With the pin puncture strength of less than 3,000 mN/20 µm, batteries comprising the microporous polyethylene membrane as separators likely suffer short-circuiting between electrodes. The pin puncture strength is preferably 3,500 mN/20 µm or more.

(d) Tensile rupture strength of 80,000 kPa or more

With the tensile rupture strength of 80,000 kPa or more in both longitudinal direction (MD) and transverse direction (TD), the battery separator formed by the membrane is unlikely ruptured. The tensile rupture strength is preferably 100,000 kPa or more in both MD and TD.

(e) Tensile rupture elongation of 100% or more

With the tensile rupture elongation of 100% or more in both longitudinal direction (MD) and transverse direction (TD), the battery separator formed by the membrane is unlikely ruptured.

(f) Heat shrinkage ratio of 10% or less

When the heat shrinkage ratio exceeds 10% in both longitudinal direction (MD) and transverse direction (TD) after exposed to 105°C for 8 hours, battery separators formed by the microporous polyethylene membrane shrink by heat generated by the batteries, resulting in high likelihood of short-circuiting in their end portions. The heat shrinkage ratio is preferably 8% or less in both MD and TD.

(g) Thickness variation ratio after heat compression of 30% or less

A thickness variation ratio by heat compression at pressure of 2.2 MPa (22 kgf/cm²) and 90°C for 5 minutes is 30% or less, assuming that the thickness before compression is 100%. With the thickness variation ratio of 30% or less, the microporous membrane used as a separator provides batteries with large capacity and good cycle characteristics. This thickness variation ratio is preferably 20% or less.

(h) Post-compression air permeability of 700 sec/100 cm³ or less

The post-compression air permeability (Gurley value) after heat-compressed under the above conditions is 700 sec/100 cm³ or less. With the post-compression air permeability of 700 sec/100 cm³ or less, the microporous membrane used as a separator provides batteries with large capacity and good cycle characteristics. The post-compression air permeability is preferably 650 sec/100 cm³ or less.

Thus, the microporous membrane of this invention suffers only small variation of thickness and air permeability when compressed, and has excellent permeability, mechanical properties and heat shrinkage resistance. Further, because it has an electrolytic solution absorption speed at least 1.5-fold that of a membrane free from a coarse-structure layer, it is particularly suitable as a battery separator.

[4] Battery separator

The thickness of the battery separator formed by the above microporous polyethylene membrane is preferably 5 to 50 µm, more preferably 10 to 35 µm, though properly selected depending on the types of batteries.

[5] Battery

The microporous polyethylene membrane of this invention can be used preferably as a separator for secondary batteries such as nickel-hydrogen batteries, nickel-cadmium batteries, nickel-zinc batteries, silver-zinc batteries, lithium secondary batteries, lithium polymer secondary batteries, etc., particularly as a separator for lithium secondary batteries. The lithium secondary battery, for example will be described below.

The lithium secondary battery comprises a cathode and an anode laminated via a separator, the separator containing an electrolytic solution (electrolyte). The electrode can be of any known structure, not particularly critical. The electrode structure can be, for instance, a coin type in which disc-shaped cathode and anode are opposing, a laminate type in which planar cathode and anode are alternately laminated, a toroidal type in which ribbon-shaped cathode and anode are wound, etc.

The cathode usually comprises a current collector, and a cathodic active material layer capable of absorbing and discharging lithium ions, which is formed on the current collector. The cathodic active materials can be inorganic compounds such as transition metal oxides, composite oxides of lithium and transition metals (lithium composite oxides), transition metal sulfides, etc. The transition metals can be V, Mn, Fe, Co, Ni, etc. Preferred examples of the lithium composite oxides are lithium nickelate, lithium cobaltate, lithium manganate, laminar lithium composite oxides having an α-NaFeO₂ structure, etc. The anode comprises a current collector, and an anodic active material layer formed on the current collector. The anodic active materials can be carbonaceous materials such as natural graphite, artificial graphite, cokes, carbon black, etc.

The electrolytic solutions can be obtained by dissolving lithium salts in organic solvents. The lithium salts can be LiClO₄, LiPF₆, LiAsF₆, LiSbF₆, LiBF₄, LiCF₃SO₃, LiN(CF₃SO₂)₂, LiC(CF₃SO₂)₃, Li₂B₁₀Cl₁₀, LiN(C₂F₅SO₂)₂, LiPF₄(CF₃)₂, LiPF₃(C₂F₅)₃, lower aliphatic carboxylates of lithium, LiAlCl₄, etc. The lithium salts can be used alone or in combination. The organic solvents can be organic solvents having high boiling points and high dielectric constants such as ethylene carbonate, propylene carbonate, ethylmethyl carbonate, γ-butyrolactone, etc.; organic solvents having low boiling points and low viscosity such as tetrahydrofuran, 2-methyltetrahydrofuran, dimethoxyethane, dioxolane, dimethyl carbonate, diethyl carbonate, etc. These organic solvents can be used alone or in combination. Because organic solvents having high dielectric constants have high viscosity, while those having low viscosity have low dielectric constants, their mixtures are preferably used.

When the battery is assembled, the separator can be impregnated with the electrolytic solution, so that the separator (microporous membrane) is provided with ion permeability. The impregnation usually is conducted by immersing the microporous membrane in the electrolytic solution at room temperature. When a cylindrical battery is assembled, for instance, a cathode sheet, a separator formed by the microporous membrane, and an anode sheet are laminated in this order, and the resultant laminate is wound to a toroidal-type electrode assembly. The resulting electrode assembly can be charged into a battery can and impregnated with the above electrolytic solution. A battery lid acting as a cathode terminal equipped with a safety valve can be caulked to the battery can via a gasket to produce a battery.

This invention will be described in more detail with reference to Examples below without intention of restricting the scope of this invention.

Example 1

Dry-blended were 100 parts by mass of a polyethylene composition comprising 5% by mass of ultra-high-molecular-weight polyethylene (UHMWPE) having Mw of 1.5 x 10⁶ and Mw/Mn of 8, and 95% by mass of high-density polyethylene (HDPE) having Mw of 3.0 x 10⁵ and Mw/Mn of 8.6, with 0.375 parts by mass of tetrakis[methylene-3-(3,5-ditertiary-butyl-4-hydroxyphenyl)-propionate] methane as an antioxidant. Measurement revealed that the PE composition comprising UHMWPE and HDPE had Mw of 3.8 x 10⁵, Mw/Mn of 10.2, a melting point of 134°C, a crystal dispersion temperature of 100°C, and a crystallization temperature of 105°C.

The Mw and Mw/Mn of UHMWPE, HDPE and the PE composition were measured by gel permeation chromatography (GPC) under the following conditions.
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500 µl,
Detector: Differential Refractometer (RI detector) available from Waters Corp., and
Calibration curve: Produced from a calibration curve of a single-dispersion, standard polystyrene sample using a predetermined conversion constant.

30 parts by mass of the resultant mixture was charged into a double-screw extruder (inner diameter = 58 mm, L/D = 52.5), and 70 parts by mass of liquid paraffin was supplied to the double-screw extruder via its side feeder. Melt-blending was conducted at 210°C and 200 rpm to prepare a polyethylene solution. This polyethylene solution was extruded from a T-die attached to a tip end of the extruder, and the extrudate was slowly cooled by contact with a cooling roll controlled at 15°C (contact time: 10 seconds) while being exposed to the air at room temperature on the opposite side of the cooling roll, to provide a gel-like sheet.

Using a tenter-stretching machine, the gel-like sheet was simultaneously and biaxially stretched at 116°C as a first stretching step, such that the stretching magnification was 5-fold in both longitudinal direction (MD) and transverse direction (TD). Fixed to an aluminum frame of 20 cm x 20 cm, the stretched membrane was immersed in methylene chloride controlled at 25°C, and washed with the vibration of 100 rpm for 3 minutes. The resultant membrane was air-dried at room temperature. The dried membrane was stretched again to 1.1-fold in a transverse direction (TD) at 128°C by a batch-type stretching machine (second stretching). Fixed to the batch-type stretching machine, the re-stretched membrane was heat-set at 128°C for 10 minutes to produce a microporous polyethylene membrane.

Example 2

A microporous polyethylene membrane was produced in the same manner as in Example 1, except that a polyethylene composition (Mw: 4.0 x 10⁵, Mw/Mn: 11.0, melting point: 134.5°C, crystal dispersion temperature: 100°C, crystallization temperature: 105°C) comprising 5% by mass of ultra-high-molecular-weight polyethylene having Mw of 2.0 x 10⁶ and Mw/Mn of 8, and 95% by mass of HDPE was used, that the first stretching temperature was 117.5°C, that the second stretching was conducted to 1.35-fold in TD at a temperature of 130.5°C, and that the heat-setting temperature was 130.5°C.

Example 3

A microporous polyethylene membrane was produced in the same manner as in Example 1, except that the same polyethylene composition as in Example 2 was used, and that both the second stretching temperature and the heat-setting temperature were 129°C.

Example 4

A microporous polyethylene membrane was produced in the same manner as in Example 1, except that a polyethylene composition (Mw: 5.5 x 10⁵, Mw/Mn: 11.9, melting point: 135°C, crystal dispersion temperature: 100°C, crystallization temperature: 105°C) comprising 10% by mass of ultra-high-molecular-weight polyethylene having Mw of 2.0 x 10⁶ and Mw/Mn of 8, and 90% by mass of HDPE, that a polyethylene concentration in the melt blend was 35% by mass, that the first stretching temperature was 118.5°C, that the second stretching was conducted to 1.4-fold in TD at a temperature of 129.5°C, and that the heat-setting temperature was 129.5°C.

Example 5

A microporous polyethylene membrane was produced in the same manner as in Example 1, except that the same polyethylene composition as in Example 4 was used, that the polyethylene extrudate was drawn by a cooling roll while blowing an air of 20°C in a flow rate of 100 ml/m² to a surface of the extrudate on the opposite side of the cooling roll, thereby forming a gel-like sheet, that the first stretching temperature was 117°C, and that both the second stretching temperature and the heat-setting temperature were 129.2°C.

Example 6

A microporous polyethylene membrane was produced in the same manner as in Example 4, except that the cooling roll temperature was 45°C, that the first stretching temperature was 117°C, and that both the second stretching temperature and the heat-setting temperature were 129.2°C.

Example 7

A microporous polyethylene membrane was produced in the same manner as in Example 1, except that the same polyethylene composition as in Example 4 was used, that the first stretching temperature was 117°C, that after the first stretching, heat-setting at 125°C for 15 seconds were conducted, that after the heat-setting, washing were conducted to remove a liquid paraffin, and that the second stretching temperature and the heat-setting temperature were 129.5°C.

Example 8

A microporous polyethylene membrane was produced in the same manner as in Example 1, except that the same polyethylene composition as in Example 4 was used, that at a time when the membrane was stretched to 2.5-fold x 2.5-fold during the first stretching, the temperature was elevated from 117°C to 125°C at a speed of 1°C/second while continuing stretching, that after the first stretching, heat-setting at 125°C for 15 seconds were conducted, that after the heat-setting, washing were conducted to remove a liquid paraffin, and that both the second stretching temperature and the heat-setting temperature were 129°C.

Example 9

A microporous polyethylene membrane was produced in the same manner as in Example 1, except that the same polyethylene composition as in Example 4 was used, that the first-stretched gel-like sheet was fixed to an aluminum frame plate of 20 cm x 20 cm, immersed in a liquid paraffin bath controlled at 130°C for 3 seconds, and then washed to remove a liquid paraffin, and that both the second stretching temperature and the heat-setting temperature were 129°C.

Example 10

A microporous polyethylene membrane was produced in the same manner as in Example 1, except that a polyethylene composition (Mw: 5.5 x 10⁵, Mw/Mn: 18.5, melting point: 135°C, crystal dispersion temperature: 100°C, crystallization temperature: 105°C) comprising 10% by mass of ultra-high-molecular-weight polyethylene having Mw of 2.0 x 10⁶ and Mw/Mn of 8, and 90% by mass of high-density polyethylene (HDPE) having Mw of 3.5 x 10⁵ and Mw/Mn of 13.5 was used, that the first stretching temperature was 118°C, that the second stretching was conducted to 1.1-fold in MD at a temperature of 127°C, and that the heat-setting temperature was 127°C.

Comparative Example 1

A microporous polyethylene membrane was produced in the same manner as in Example 1, except that a polyethylene composition (Mw: 6.9 x 10⁵, Mw/Mn: 21.5, melting point: 135°C, crystal dispersion temperature: 100°C, crystallization temperature: 105°C) comprising 20% by mass of ultra-high-molecular-weight polyethylene having Mw of 2.0 x 10⁶ and Mw/Mn of 8, and 80% by mass of high-density polyethylene having Mw of 3.5 x 10⁵ and Mw/Mn of 13.5 was used, that the cooling roll temperature was 18°C, that the first stretching temperature was 115°C, and that heat-setting was conducted at a temperature of 124°C for 10 seconds without the second stretching.

Comparative Example 2

A microporous polyethylene membrane was produced in the same manner as in Example 1, except that a polyethylene composition (Mw: 8.5 x 10⁵, Mw/Mn: 23.8, melting point: 135°C, crystal dispersion temperature: 100°C, crystallization temperature: 105°C) comprising 30% by mass of ultra-high-molecular-weight polyethylene having Mw of 2.0 x 10⁶ and Mw/Mn of 8, and 70% by mass of high-density polyethylene having Mw of 3.5 x 10⁵ and Mw/Mn of 8.6 was used, that a polyethylene concentration in the melt blend was 28.5% by mass, that the cooling roll temperature was 18°C, that the first stretching temperature was 115°C, and that heat-setting temperature was 126°C without the second stretching.

Comparative Example 3

A microporous polyethylene membrane was produced in the same manner as in Example 1, except that the same polyethylene composition as in Comparative Example 2 was used, that a polyethylene composition concentration in the melt blend was 28.5% by mass, that the cooling roll temperature was 18°C, the first stretching temperature was 115°C, that the second stretching was conducted to 1.8-fold in TD at a temperature of 126°C, and that the heat-setting temperature was 126°C.

The properties of the microporous polyethylene membranes obtained in Examples 1 to 10 and Comparative Examples 1 to 3 were measured by the following methods. The results are shown in Table 1.

(1) Average thickness (µm)

The thickness of the microporous polyethylene membrane was measured at an arbitrary longitudinal position and at a 5-mm interval over a length of 30 cm in a transverse direction (TD) by a contact thickness meter, and the measured thickness was averaged.

(2) Air permeability (sec/100 cm³/20 µm)

The air permeability P₁ of the microporous polyethylene membrane having a thickness T₁ was measured according to JIS P8117, and converted to air permeability P₂ at a thickness of 20 µm by the formula of P₂ = (P₁ x 20)/T₁.

(3) Porosity (%)

It was measured by a mass method.

(4) Pin puncture strength (mN/20 µm)

The maximum load was measured when a microporous polyethylene membrane having a thickness T₁ was pricked with a needle of 1 mm in diameter with a spherical end surface (radius R of curvature: 0.5 mm) at a speed of 2 mm/second. The measured maximum load L₁ was converted to the maximum load L₂ at a thickness of 20 µm by the formula of L₂ = (L₁ x 20)/T₁, which was regarded as pin puncture strength.

(5) Tensile rupture strength and tensile rupture elongation

They were measured using a 10-mm-wide rectangular test piece according to ASTM D882.

(6) Heat Shrinkage Ratio (%)

The shrinkage ratio of the microporous polyethylene membrane after exposed to 105°C for 8 hours was measured three times in both longitudinal direction (MD) and transverse direction (TD) and averaged.

(7) High-order structure

In a transmission electron photmicrograph (TEM photograph with magnification of 10,000-fold) of a vertical cross section of the microporous membrane, a region A extending the entire thickness in a vertical direction and 20 µm in a planar direction was taken. The region A was divided every 2 µm in the thickness direction to provide rectangular regions in the total number of 8 to 12 depending on the thickness, and each of five pores in each rectangular region was measured with respect to the maximum diameter (diameter of the maximum circumscribed circle) and the minimum diameter (diameter of the maximum inscribed circle). They were arithmetically averaged to determine an average pore diameter in each rectangular region. A rectangular region B, in which the average pore diameter was 0.01 to 0.05 µm, was regarded as a dense-structure region, and the average pore diameters in all the rectangular regions B were arithmetically averaged to determine an average pore diameter in the dense-structure layer. A rectangular region C other than the rectangular region B in the region A was regarded as a coarse-structure region, and the average pore diameters in all the rectangular regions C were arithmetically averaged to determine an average pore diameter in the coarse-structure layer.
An average pore diameter ratio was calculated by the formula of (average pore diameter in coarse-structure layer)/(average pore diameter in dense-structure layer). The total thickness of all the rectangular regions B was regarded as the thickness of the dense-structure layer, and the total thickness of all the rectangular regions C was regarded as the thickness of the coarse-structure layer, thereby determining a thickness ratio expressed by (thickness of coarse-structure layer)/(thickness of dense-structure layer).

(8) Ratio of thickness variation by heat compression

A microporous membrane sample was sandwiched by a pair of highly flat press plates, and heat-compressed by a press machine at a pressure of 2.2 MPa (22 kgf/cm²) and 90°C for 5 minutes to calculate a thickness variation ratio with the thickness before compression being 100%.

(9) Post-compression air permeability (sec/100 cm³)

The microporous polyethylene membrane after heat-compressed under the above conditions was measured with respect to air permeability according to JIS P8117 as post-compression air permeability.

(10) Electrolytic solution absorption speed

Using a dynamic-surface-tension-measuring apparatus (DCAT21 with high-precision electronic balance, available from Eko Instruments Co., Ltd.), a microporous membrane was immersed for a predetermined period of time in an electrolytic solution (electrolyte: 1 mol/L of LiPF₆, solvent: ethylene carbonate/dimethyl carbonate at a volume ratio of 3/7) kept at 18°C, to measure mass increase to calculate the amount of the electrolytic solution absorbed per a sample mass [increment of membrane mass (g) / membrane mass (g) before absorption] as an index of the absorption speed. The electrolytic solution absorption speed is expressed by a relative value, assuming that the absorption speed (g/g) of the membrane of Comparative Example 1 is 1.

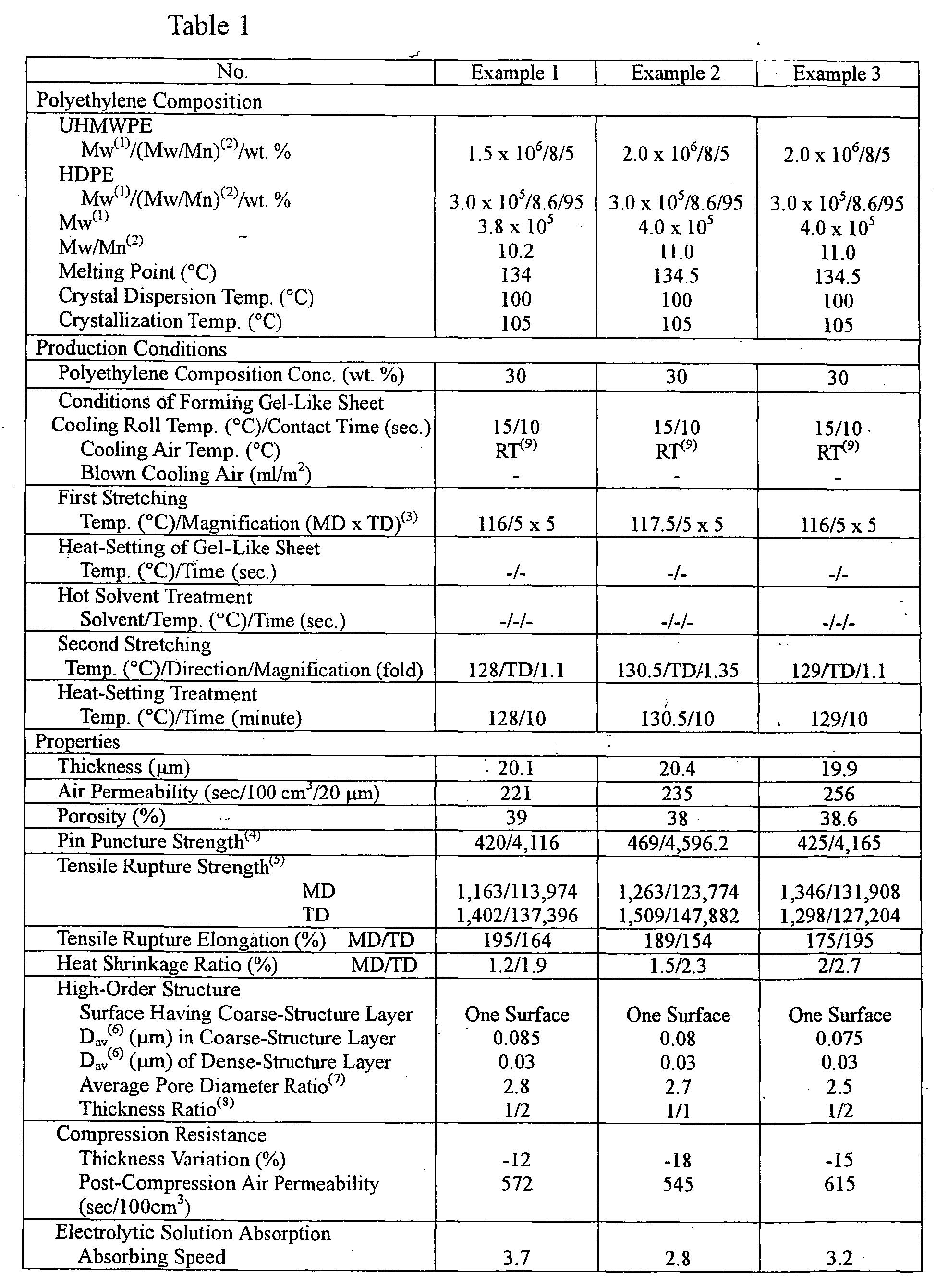

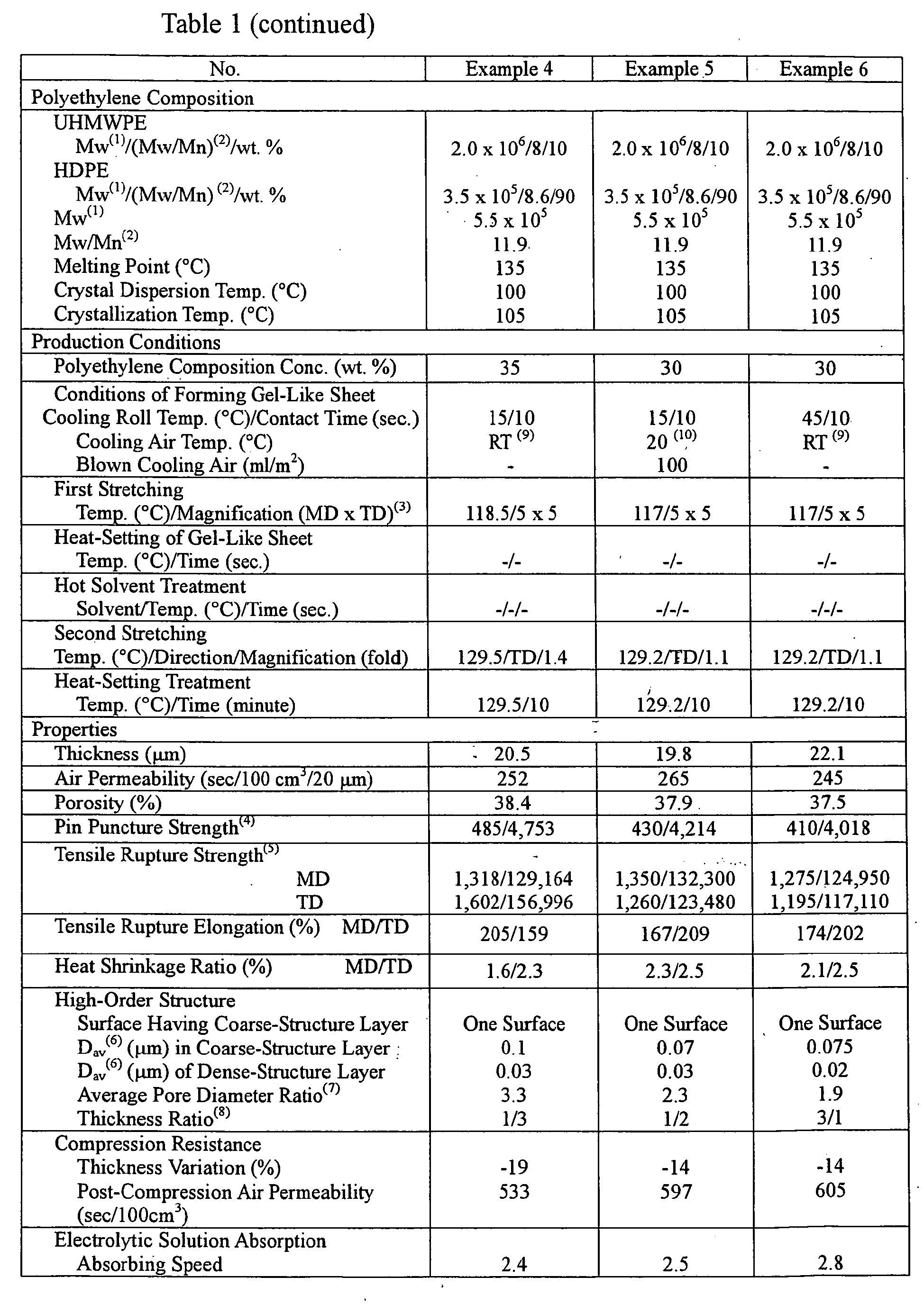

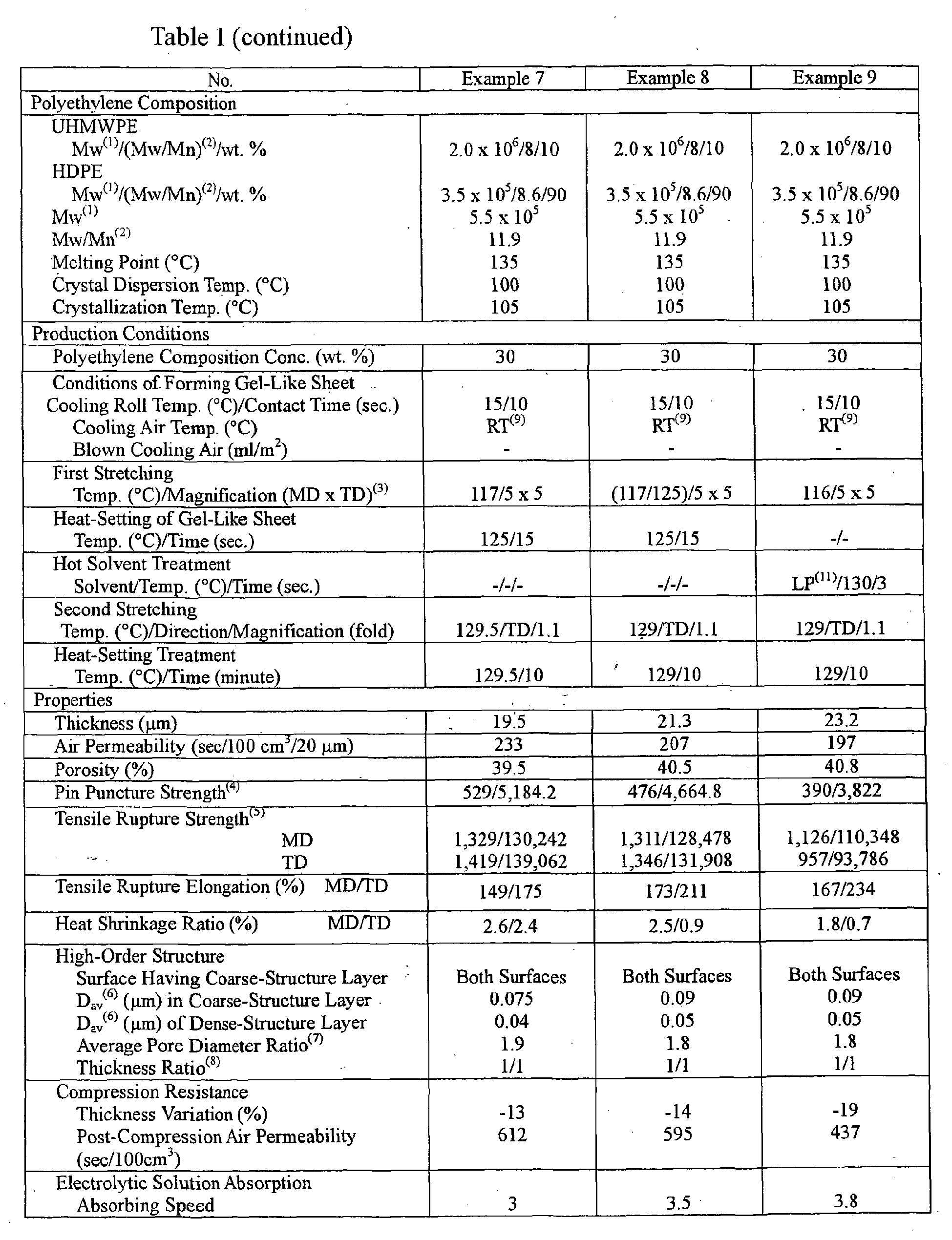

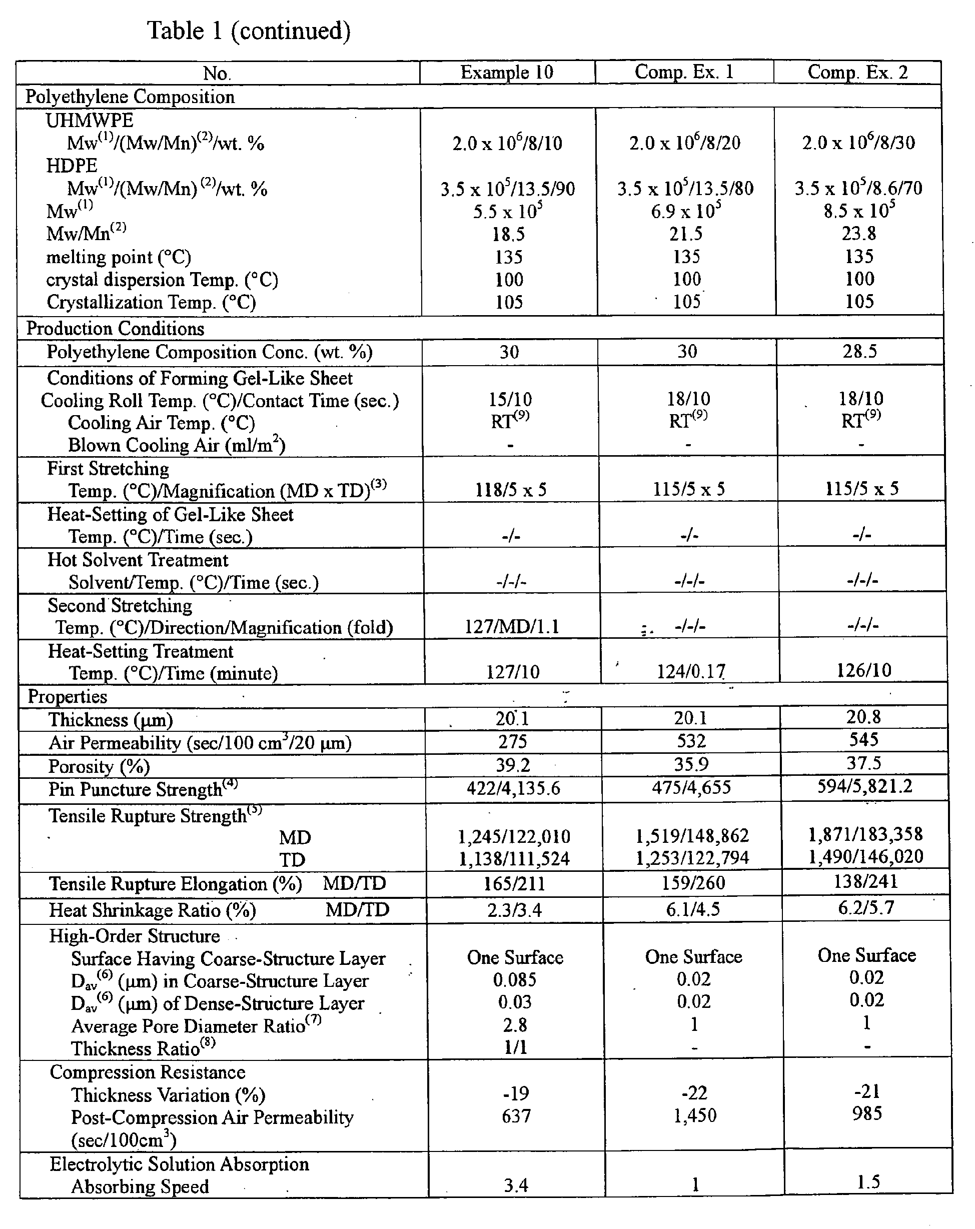

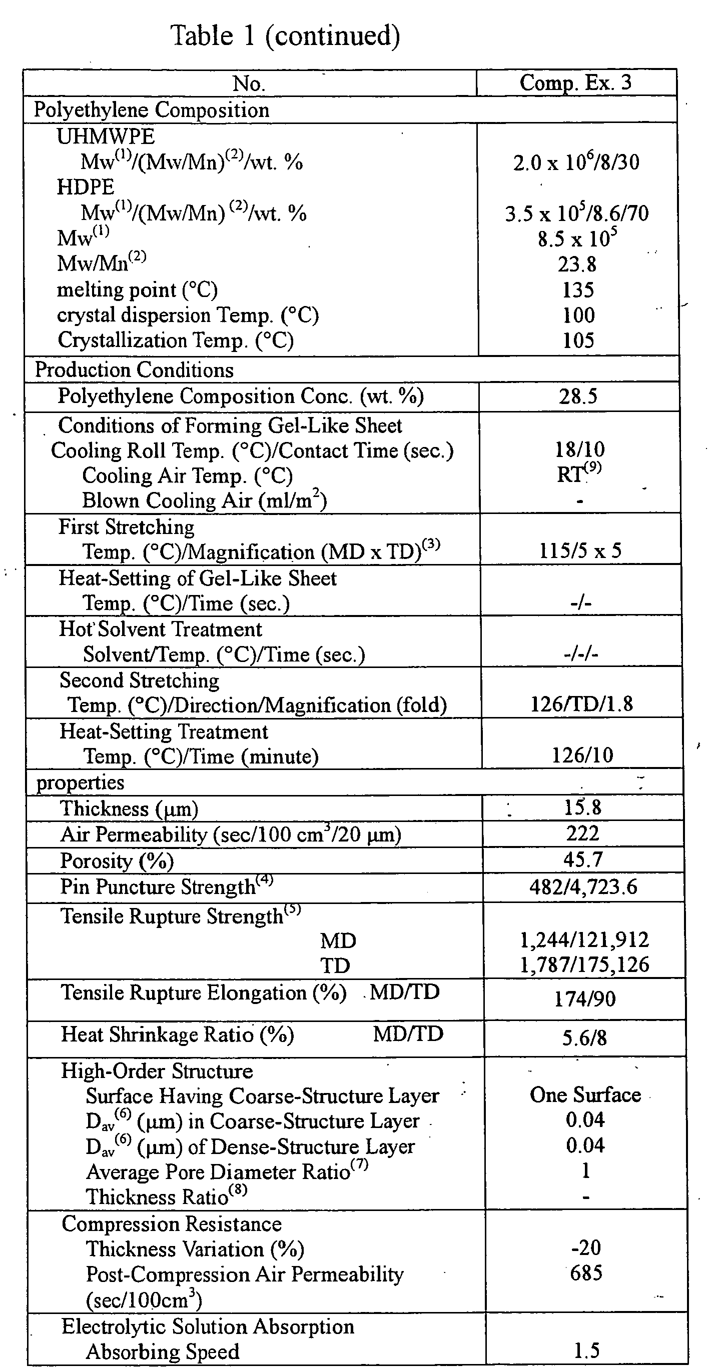

Note: (1) Mw represents a mass-average molecular weight.

(2) Mw/Mn represents a molecular weight distribution.

(3) MD represents a longitudinal direction, and TD represents a transverse direction.

(4) The units are g/20 µm and mN/20 µm.

(5) The units are kg/cm² and kPa.

(6) Average pore diameter

(7) (Average pore diameter in coarse-structure layer)/(average pore diameter in dense-structure layer).

(8) (Thickness of coarse-structure layer)/(thickness of dense-structure layer).

(9) Exposed to the air at RT (room temperature).

(10) Blowing the air at 20°C.

(11) LP represents a liquid paraffin.

It is clear from Table 1 that because each microporous polyethylene membrane of Examples 1 to 10 has a dense-structure layer having an average pore diameter of 0.01 to 0.05 µm and a coarse-structure layer having an average pore diameter 1.2-fold to 5.0-fold that of the dense-structure layer, it suffered only small variation of thickness and air permeability by compression, and had a high electrolytic solution absorption speed as well as excellent permeability, mechanical properties and heat shrinkage resistance.

On the other hand, because the ultra-high-molecular-weight polyethylene content in the polyethylene composition was more than 15% by mass in the membranes of Comparative Examples 1 and 2, they did not have coarse-structure layers. In addition, because re-stretching was not conducted in Comparative Examples 1 and 2, they suffered larger variation of thickness and air permeability by compression, and had lower electrolytic solution absorption speeds and poorer permeability and heat resistance than in Examples 1 to 10. Because the ultra-high-molecular-weight polyethylene content in the polyethylene composition was more than 15% by mass in the membrane of Comparative Example 3, the membrane did not have a coarse-structure layer.
In addition, because re-stretching magnification was more than 1.45-fold in Comparative Example 3, the membrane suffered larger thickness variation by compression, and had a lower electrolytic solution absorption speed as well as poorer tensile rupture elongation and heat shrinkage resistance than in Examples 1 to 10.

### EFFECT OF THE INVENTION

The microporous polyethylene membrane of this invention suffers only small variation of thickness and air permeability when compressed, and has a high electrolytic solution absorption speed as well as excellent mechanical properties, permeability and heat shrinkage resistance. The use of such microporous polyethylene membrane as a separator provides batteries with excellent safety properties such as compression resistance and productivity.

## Claims

1. A microporous polyethylene membrane made of a polyethylene resin comprising 15% or less by mass of ultra-high-molecular-weight polyethylene having a mass-average molecular weight of 1 x 10⁶ or more, which is constituted by a dense-structure layer having an average pore diameter of 0.01 to 0.05 µm, and a coarse-structure layer formed on at least one surface, the average pore diameter of the coarse-structure layer being as large as 1.2-fold to 5.0-fold of that of the dense-structure layer.

2. The microporous polyethylene membrane according to claim 1, wherein the polyethylene resin is composed of the ultra-high-molecular-weight polyethylene and high-density polyethylene.

3. The microporous polyethylene membrane according to claim 1 or 2, wherein a thickness ratio of the coarse-structure layer to the dense-structure layer is 5/1 to 1/10.

4. A method for producing a microporous polyethylene membrane comprising the steps of extruding a melt blend of a polyethylene resin comprising 15% or less by mass of ultra-high-molecular-weight polyethylene having a mass-average molecular weight of 1 x 10⁶ or more and a membrane-forming solvent through a die, cooling the resultant extrudate with a temperature distribution in a thickness direction to provide a gel-like sheet, stretching the gel-like sheet at a temperature from the crystal dispersion temperature of the polyethylene resin + 10°C to the crystal dispersion temperature + 30°C in at least one direction, removing the membrane-forming solvent, and stretching the resultant membrane again to 1.05-fold to 1.45-fold in at least one direction.

5. The method for producing a microporous polyethylene membrane according to claim 4, wherein the gel-like sheet is formed by rapidly cooling one surface of the extrudate while slowly cooling another surface of the extrudate.

6. The method for producing a microporous polyethylene membrane according to claim 5, wherein the gel-like sheet is formed by rapidly cooling one surface of the extrudate by a cooling roll controlled at a temperature from the crystallization temperature of the polyethylene resin - 115°C to the crystallization temperature - 25°C for a contact time of 1 to 30 seconds, while slowly cooling another surface of the extrudate by exposure to the air at room temperature.

7. The method for producing a microporous polyethylene membrane according to any one of claims 4 to 6, wherein after the stretched gel-like sheet is heat-set, the membrane-forming solvent is removed.

8. The method for producing a microporous polyethylene membrane according to any one of claims 4 to 7, wherein the stretched gel-like sheet, and/or a microporous membrane from which the membrane-forming solvent is removed are brought into contact with a heated solvent.

9. A battery separator formed by the microporous polyethylene membrane recited in any one of claims 1 to 3.
